# EUROPÄISCHE PATENTANMELDUNG

(11) **EP 1 403 554 A2**
(43) Veröffentlichungstag der Anmeldung: **31.03.2004**
(21) Anmeldenummer: 03019431.0
(22) Anmeldetag: 28.08.2003
(51) Int. Cl.: F16H 15/38

(54) **Toroidgetriebe mit an den Zwischenrollen angeordneten Ölsammeleinrichtungen**

(30) Priorität: 26.09.2002 DE 10244824
(71) Anmelder: Bayerische Motoren Werke Aktiengesellschaft, 80809 München (DE)
(72) Erfinder: Ginglas, Eduard, 86199 Augsburg (DE)

(57) **Zusammenfassung**

Toroidgetriebe mit einer Antriebsscheibe, einer Abtriebsscheibe und mindestens einer Zwischenrolle (1) zur Drehmomentenübertragung von der Antriebsscheibe auf die Abtriebsscheibe. Ferner ist eine Ölsammeleinrichtung (4) vorgesehen, die an der Zwischenrolle (1) befestigt ist und die sich mit der Zwischenrolle (1) mitdreht. Ein Teil der Zwischenrolle (1) ist in Kühlöl eingetaucht ist, welches sich in der Ölsammeleinrichtung (4) befindet.

## Beschreibung

Die vorliegende Erfindung betrifft ein Toroidgetriebe gemäß dem Oberbegriff des Patentanspruches 1.

Toroidgetriebe sind hinlänglich bekannt und zum Beispiel in der DE 198 26 591 A1 beschrieben. Toroidgetriebe weisen prinzipiell eine Antriebsscheibe sowie eine koaxial dazu angeordnete Abtriebsscheibe auf. Zwischen der Antriebsscheibe und der Abtriebsscheibe sind üblicherweise drei oder mehr "Zwischenrollen" angeordnet, die auch als "Roller" bezeichnet werden und die zur Drehmomentenübertragung von der Antriebsscheibe auf die Abtriebsscheibe vorgesehen sind. Toroidgetriebe sind weitgehend verschleißfrei, da das Drehmoment von der Antriebsscheibe auf die Abtriebsscheibe nicht unmittelbar durch Berührkontakt zwischen den Scheiben und den Zwischenrollen übertragen wird, sondern jeweils über einen Ölfilm. Je nach übertragener Leistung heizen sich die Zwischenrollen auf. Somit ist eine Kühlung der Zwischenrollen erforderlich.

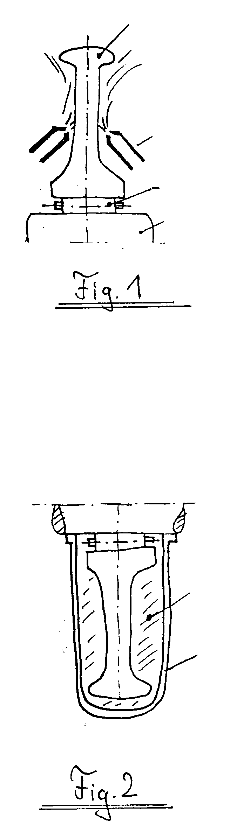

Bei bislang bekannten Toroidgetrieben werden die Zwischenrollen im Betrieb permanent mit unter Druck stehendem Öl bespritzt, was in **Figur 1** dargestellt ist. Pro Zwischenrolle sind mehrere räumlich verteilt angeordnete Spritzdüsen erforderlich um eine relativ gleichmäßige Benetzung mit Kühlöl sicherzustellen. Dies ist konstruktiv aufwendig und thermodynamisch ineffizient. Die Zwischenrollen rotieren nämlich mit zum Teil recht hohen Umfangsgeschwindigkeiten. Dadurch wird das Öl, das seitlich auf die Zwischenrollen gespritzt wird, sehr schnell wieder abgeschleudert. Die Verweildauer und somit der Wärmeübertrag von der Zwischenrolle auf das Kühlöl hängt stark von der Drehzahl der Zwischenrollen ab. Zur Sicherstellung einer ausreichenden Kühlung muss daher mit relativ hohen Kühlölvolumenströmen gearbeitet werden. Bei Toroidgetrieben mit üblicherweise sechs Zwischenrollen ergibt sich somit ein relativ großer Ölvolumenstrombedarf bei entsprechenden Öldruck.

Prinzipiell wäre es auch möglich, die Zwischenrollen mit jeweils einem in Bezug auf die jeweilige Zwischenrolle fest angeordneten Ölsammelgehäuse zu "kapseln", was in **Figur 2** dargestellt ist. Die Zwischenrolle würde sich also relativ zu einem mit Kühlöl gefüllten bzw. von Kühlöl durchströmten "stehenden Gehäuse" drehen. Dies würde zwar den Wärmeabtransport von der Zwischenrolle an das Kühlöl verbessern. Nachteilig bei dieser Lösung ist jedoch, dass das Kühlöl sich zwischen dem stehenden Gehäuse und der sich drehenden Zwischenrolle befindet. Dies würde zu hohen Schleppverlusten führen, insbesondere bei mehreren Zwischenrollen.

Aufgabe der Erfindung ist es, ein Toroidgetriebe mit einer "Kühleinrichtung" für die Zwischenrollen zu schaffen, die thermodynamisch effizient ist und die einen hohen mechanischen Wirkungsgrad, insbesondere geringe Schleppverluste, aufweist.

Diese Aufgabe wird durch die Merkmale des Patentanspruches 1 gelöst. Vorteilhafte Ausgestaltungen und Weiterbildungen der Erfindung sind den Unteransprüchen zu entnehmen.

Das Grundprinzip der Erfindung besteht in einem Toroidgetriebe, bei dem die Zwischenrollen jeweils mit einer an der jeweiligen Zwischenrolle befestigten "Ölsammeleinrichtung" ausgestattet sind. Ein Teil der Zwischenrolle ist dabei in das Öl der Ölsammeleinrichtung eingetaucht. Dadurch ergibt sich zum einen ein guter Wärmeabtransport von der Zwischenrolle an das in der Ölsammeleinrichtung befindliche Kühlöl. Zum anderen treten keine oder nur geringe Schleppverluste auf, da sich die Ölsammeleinrichtung und das darin befindliche Kühlöl mit der Zwischenrolle mitdrehen.

Nach einer Weiterbildung der Erfindung sind die Ölsammeleinrichtungen jeweils durch "ringförmige Deckscheiben" gebildet. Am linken bzw. rechten Außendurchmesser der Zwischenrolle ist jeweils eine solche sich radial vom Außenumfang nach innen erstreckende ringförmige Deckscheibe vorgesehen. Die Deckscheiben sind so am Außenumfang der Zwischenrollen angeordnet, dass jeweils zwischen den Deckscheiben und dem radial inneren Bereich der Zwischenrollen ein "Freiraum" verbleibt. Ein solcher Freiraum ist jeweils auf der linken und auf der rechten Seite der Zwischenrolle vorgesehen. Die Freiräume fungieren als Ölsammelvolumina.

Vorzugsweise ist zwischen den Deckscheiben und dem Zwischenrollenkörper in den radial inneren Bereichen des Zwischenrollenkörper jeweils eine Schwallwand angeordnet. Die Schwallwände trennen die Ölsammelvolumina jeweils in ein axial inneres Ölsammelvolumen und ein axial äußeres Ölsammelvolumen.

Vorzugsweise stehen jeweils das innere Ölsammelvolumen und das äußere Ölsammelvolumen ähnlich wie kommunizierende Röhren in Fluidverbindung miteinander.

Nach einer Weiterbildung der Erfindung ist vorgesehen, dass sich die Schwallwände in Bezug auf die Zwischenrolle weiter radial nach innen erstrecken als die ringförmigen Deckscheiben. Vorzugsweise weist das Toroidgetriebe pro Zwischenrolle mindestens eine Spritzdüse auf, die Kühlöl in die inneren Ölsammelvolumina spritzt. Da die inneren und äußeren Ölsammelvolumina in Fluidverbindung miteinander stehen, ergibt sich ein Ölvolumenstrom in der Ölsammeleinrichtung und zwar jeweils vom inneren Ölsammelvolumen zum äußeren Ölsammelvolumen. Die radial innere Kante der Deckscheiben fungiert als Überlauf. Das heißt, erhitztes Öl tropft von den Innenkanten der Deckscheiben ab. Das erhitzte Öl wird im Getriebe aufgefangen, abgekühlt, von einer Ölpumpe angesaugt und erneut in die inneren Ölsammelvolumina eingespritzt, wodurch sich ein Kühlölkreislauf ergibt.

Die Deckscheiben sind am Außendurchmesser dicht mit der jeweiligen Zwischenrolle verbunden. Dadurch staut sich das Kühlöl auf, was dazu führt, dass sich ein an den Seiten der Zwischenrolle anliegender Ölring ergibt.

Mit der oben beschriebene "Deckscheibenlösung" kann die Verweildauer des Kühlöls gezielt eingestellt werden und zwar unabhängig von der Drehzahl der Zwischenrollen und unabhängig vom Versorgungsdruck des Kühlöls und dessen Temperatur. Da die inneren Ölsammelvolumina und die äußeren Ölsammelvolumina nach dem Prinzip der kommunizierenden Röhren miteinander in Fluidverbindung stehen, erfolgt ein Ölfluss, wenn Kühlöl zugeführt wird. Je mehr Kühlöl am "Eingang" der Ölsammeleinrichtung zugeführt wird, desto mehr fließt am "Ausgang" der Ölsammeleinrichtung ab. Die Durchflussmenge wird nicht über den Versorgungsdruck direkt, sondern über die eingebracht Menge geregelt. Durch die Rotation der Zwischenrollen verteilt sich das Kühlöl in den "Kammern" der Ölsammeleinrichtung weitgehend unabhängig von dessen Drehzahl. Damit ist auch der Benetzungsgrad und somit die verbundene Kühlwirkung von der Drehzahl unabhängig. Durch die Dimensionierung des Innendurchmessers der ringförmigen Deckscheiben kann der Durchmesserbereich der Zwischenrollen, der von Kühlöl benetzt sein soll, genau eingestellt werden.

Im folgenden wir die Erfindung anhand eines Ausführungsbeispielen im Zusammenhang mit der Zeichnung näher erläutert. Es zeigen:
- Figur 1: eine Zwischenrolle gemäß dem Stand der Technik, die permanent mit Kühlöl bespritzt wird;
- Figur 2: eine Zwischenrolle, die in einem relativ zur Zwischenrolle feststehenden mit Kühlöl gefüllten Ölraum läuft; und
- Figur 3: ein Ausführungsbeispiel gemäß der Erfindung.

Die in den **Figuren 1 und 2** dargestellten Ausführungsbeispiele gemäß dem Stand der Technik wurden eingangs bereits erläutert.

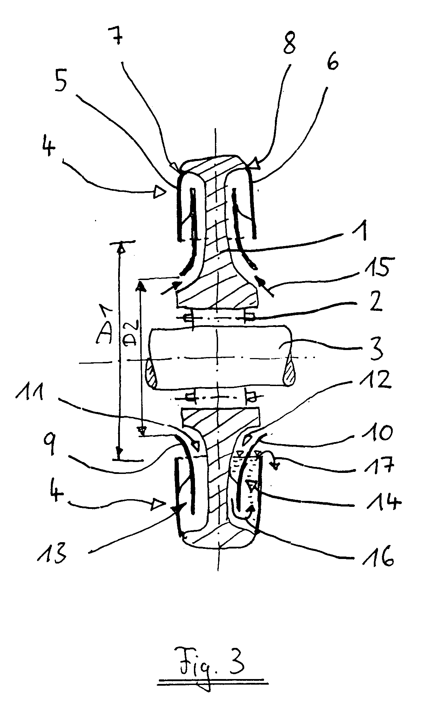

**Figur 3** zeigt eine Zwischenrolle 1 eines Toroidgetriebes. Die Zwischenrolle 1 ist mittels eines Wälzlagers 2 auf einer Rollerachse 3 gelagert. Drehfest mit der Zwischenrolle 1 ist eine Ölsammeleinrichtung verbunden, die hier ganz allgemein mit dem Bezugszeichen 4 bezeichnet ist. Die Ölsammeleinrichtung 4 weist ringförmige Deckscheiben 5, 6 auf. Die Deckscheiben 5, 6 sind auf der linken bzw. rechten Seite der Zwischenrolle 1 angeordnet und fluiddicht mit dem radial äußeren Bereich 7 bzw. 8 der Zwischenrolle 8 verbunden.

Zwischen den Deckscheiben 5, 6 und radial inneren Bereichen der Zwischenrolle 1 ist jeweils ein Zwischenraum vorgesehen, der als Ölsammelvolumen fungiert. Der Zwischenraum auf der linken und rechten Seite ist jeweils durch eine Schwallwand (9, 10) in ein axial inneres Ölsammelvolumen 11 bzw. 12 und ein radial äußeres Ölsammelvolumen 13 bzw. 14 unterteilt, die in Fluidverbindung miteinander stehen.

Wie aus **Figur 3** ersichtlich ist, ist der Innendurchmesser D1 der Deckscheiben 5, 6 größer als der Innendurchmesser D2 der Schwallwände 9, 10. Das heißt, die Schwallwände 9, 10 erstrecken sich weiter radial nach innen als die Deckscheiben 5, 6. Wie durch Pfeile 15 angedeutet ist, wird Kühlöl über die axial inneren Ölsammelvolumina 11, 12 zugeführt. Die Zwischenrolle 1 ist in das Kühlöl eingetaucht. Dabei erhitzt sich das Kühlöl. Aufgrund der permanenten Zufuhr von Kühlöl über die axial inneren Ölsammelvolumina 11, 12 ergibt sich ein Kühlölstrom in der Ölsammeleinrichtung 4, was durch die Pfeile 16, 17 angedeutet ist. Kühlöl strömt also von den axial inneren Ölsammelvolumina 11, 12 in die axial äußeren Ölsammelvolumina 13, 14 und tropft, ähnlich wie bei einem Überlauf, von den radial inneren Kanten der Deckscheiben 5, 6 nach unten, was durch den Pfeil 17 angedeutet ist.

## Patentansprüche

1. Toroidgetriebe mit einer Antriebsscheibe, einer Abtriebsscheibe und mindestens einer Zwischenrolle (1) zur Drehmomentenübertragung von der Antriebsscheibe auf die Abtriebsscheibe,
**dadurch gekennzeichnet, dass**
eine Ölsammeleinrichtung (4) vorgesehen ist, die an der Zwischenrolle (1) befestigt ist und die sich mit der Zwischenrolle (1) mitdreht, wobei ein Teil der Zwischenrolle (1) in Kühlöl eingetaucht ist, welches sich in der Ölsammeleinrichtung befindet.

2. Toroidgetriebe nach Anspruch 1, wobei im Bereich des linken und des rechten Außendurchmessers (7, 8) der Zwischenrolle (1) jeweils eine sich radial vom Außenumfang nach innen erstreckende ringförmige Deckscheibe (5, 6) befestigt ist, wobei jeweils zwischen den Deckscheiben (5, 6) und den Zwischenrollen (1) Freiräume (11-14) vorgesehen sind, die als Ölsammelvolumina fungieren.

3. Toroidgetriebe nach Anspruch 2, wobei jeweils zwischen den Deckscheiben (5, 6) und der Zwischenrolle (1) eine Schwallwand (9, 10) angeordnet ist, welche das Ölsammelvolumen auf beiden Seiten der Zwischenrolle (1) jeweils in ein inneres Ölsammelvolumen (11, 12) und in ein äußeres Ölsammelvolumen (13, 14) unterteilen.

4. Toroidgetriebe nach Anspruch 3, wobei jeweils das innere Ölsammelvolumen (11, 12) und das äußere Ölsammelvolumen (13, 14) in Fluidverbindung miteinander stehen.

5. Toroidgetriebe nach Anspruch 3 oder 4, wobei sich die Schwallwände (9, 10) in Bezug auf die Zwischenrolle (1) weiter radial nach innen erstrecken als die Deckscheiben (5, 6).

6. Toroidgetriebe nach einem der Ansprüche 3 bis 5, wobei während des Betriebs des Toroidgetriebes ständig Kühlöl in die inneren Ölsammelvolumina (11, 12) gespritzt wird und erwärmtes Kühlöl aus den äußeren Ölsammelvolumina (13, 14) herausläuft.
